# EUROPEAN PATENT SPECIFICATION

(11) **EP 1 564 959 B1**
(45) Date of publication and mention of the grant of the patent: **16.01.2008**
(21) Application number: 05002667.3
(22) Date of filing: 09.02.2005
(51) Int. Cl.: H04L 29/06, H04L 12/18

(54) **System and method for trivial file transfer protocol including broadcasting function**
System und Verfahren für das triviale Dateitransferprotokoll (TFTP) mit einer Broadcast-Funktion
Système et méthode pour le protocole de transfert de fichier trivial avec une fonction de diffusion

(30) Priority: 10.02.2004 KR 2004008815
(43) Date of publication of application: 17.08.2005
(73) Proprietor: SAMSUNG ELECTRONICS CO., LTD., Suwon-si, Gyeonggi-do (KR)
(72) Inventor: Paek, Seung-Hak, Bungdang-gu Seongnam-si Gyeonggi-do (KR); Choe, Byung-Gu, Youngdeungpo-gu Seoul (KR); Park, Yong-Seok, Yongin-si Gyeonggi-do (KR)
(74) Representative: Lang, Johannes

(56) References cited:
- EP-A- 1 134 950
- US-B1- 6 185 623
- EMBERSON E.: "TFTP Multicast Option" RFC 2090, 1 February 1997 (1997-02-01), XP015007874 IETF
- MALKIN G. ET AL: "TFTP Option Extension" RFC 2347, 1 May 1998 (1998-05-01), XP015008131 IETF
- SOLLINS K.: "The TFTP Protocol (Revision 2)" RFC 1350, 1 July 1992 (1992-07-01), XP015007137 IETF

## Description

### BACKGROUND OF THE INVENTION

### Field of the Invention

The present invention relates to a Trivial File Transfer Protocol (hereinafter, referred to as "TFTP") system and method thereof and, more particularly, to a system and method for the TFTP including a broadcasting function in which a new option is added to the TFTP to allow several clients to connect with one server to simultaneously download files.

### Description of the Related Art

In most of the systems, data is represented as a unit called a file. It is required to transfer a file and a part of the file to transfer data between systems.

In systems interconnected via a network, in a case where a user of one system desires to receive data from the other system to his or her system or to transfer the data from the his or her system to the other system, namely, where the systems desire to communicate with each other, rules and regulations are required to allow these systems to communicate with each other. The rules and regulations are called a protocol.

At this time, a system requesting data transmission is called a client system while a system providing a service in response to such a request is called a server system. Normally, a plurality of client systems are connected to one server system.

A language used extensively in computer networks is a Transfer Control Protocol/Internet Protocol (TCP/IP). A TCP/IP based protocol includes a File Transfer Protocol (FTP), a Terminal Emulation Protocol (Telnet), a Hyper Text Transfer Protocol (HTTP), and the like.

Here, the purpose of the File Transfer Protocol (FTP) is to transfer one file or a part of the file from one system to the other system under instructions of an FTP user.

Most of the FTPs are interactively used by on-line users. Communication between FTP users is arbitrated by an operating system. This operating system has an input/output (I/O) driver. If a user of system A desires to access a file in system B, the FTP in the system A establishes a connection with the FTP in the system B. This is, of course, a logical connection. An actual path for control information and user data is formed through respective layers of a protocol stack.

Meanwhile, the Trivial File Transfer Protocol (TFTP) is a kind of FTP. It is designed to be simpler than FTP and implemented only with small codes. The TFTP is easily implemented in a read only memory (ROM), and is often used as a protocol to download an operating system image in a diskless system.

Generally, the FTP is a protocol that transmits and receives files in a reliable and connection-oriented manner using TCP while the TFTP is a non-connection file transfer protocol using a User Datagram Protocol (UDP). The TFTP is mainly used when a router downloads a configuration file and an IOS image. The TFTP exhibits a speed faster than that of the FTP because there is no option for security.

A difference in transmission between the TCP and the UDP may be understood by examining contents on the two protocols. The TCP is a connection-oriented reliable protocol as mentioned above, and will control a flow through a sliding window.

Further, the TCP performs control using a sequence number and an approval number. The TCP resends all data that do not receive acknowledgement (ACK) and, only when receiving a signal notifying that data has been received, sends next data, to guarantee the reliability in data transmission.

However, the UDP has a faster transmission speed since it has no function of checking whether data arrived well (checksum) unlike the TCP, and the UDP does not have to transfer a control frame since it does not have a connection, thereby reducing load of a network. Because the UDP has no confirmation procedure or flow control, application programs must serve to perform it instead. The UDP may be considered to be one-directional transmission. This is because there is no retransmission of an ACK (acknowledgement) code notifying that data arrived successively.

The above-described TFTP protocol was designed to transfer small-sized files a long time ago. It is easily implemented as compared to an Internet FTP, has a server-client configuration, and uses IP/UDP. The relevant protocol has been defined in the IETF RFC1350 (Internet engineering task force request for comments 1350).

Up to now, numerous systems with this protocol are widely being used because it is easy to transfer files in small-sized programs. However, it was impossible to transfer data of 32 Mbytes (megabytes) or more due to constraints of fixed data transmission of 512-byte and a block max size of 65535.

To overcome these constraints, an option function has been added later. The TFTP protocol became more valuable by allowing such a function to adjust the transmission size of data. This content was standardized as RFC (request for comments) 2347 TFTP Option Extension, RFC 2348 Blocksize Option.

Further, RFC2090 has a multicast option to enable multicast. However, the RFC2090 is an experimental version and is not standardized. It can be implemented in a server but is not implemented in most of the clients.

Currently, a TFTP server-client program is basically provided in Berkeley Software Distribution (Berkeley Software Design; BSD), UNIX and Linux series. In Windows series, there are many programs available as freeware.

This TFTP protocol is not used well under a situation where a network function is well implemented, but it is extensively being used in the case where personal computers (PCs) or many systems (*i.e*., almost all equipment having a network function) must download a package after being booted in a basic manner without an operating system (OS) first and foremost.

Since the TFTP protocol is adapted so that, basically, a server and a client operate in a one-to-one manner, it is not suitable for a plurality of clients to download files from one server.

In a PC (personal computer) clustering environment, or an environment in which one equipment is composed of several modules and each of the modules must download basic files from a main module at the moment of power-on, the load of a network increases and a file transfer error also increases because the server tries to transfer the files in the one-to-one manner if several clients attempt to simultaneously download the files from the server.

To overcome this, a multicast TFTP is defined in the RFC2090. However, it is in an experimental state and is not standardized, and is complicated to implement in clients.

In the multicast function defined in the RFC2090, a multicast IP address to be used upon transmission is required, and also, since clients will download a file from a middle part of the file if the clients make a connection while other clients download the file, the clients themselves must have a function of recombining file blocks.

However, because the TFTP is generally used upon initial booting rather than when a normal network function has been built, implemented programs in clients are adapted to perform only the simplest operation.

Accordingly, in most of TFTP functions, there is no problem even though a server program is enhanced to have complicated functions. However, because a TFTP function as a client is very simple, it is difficult to process functions such as block recombination.

In this case, the TFTP client function gives and takes data packets and ACK packets in sequence according to a block number (#), in which the operation of the client is blocked if any packet is lost during transmission. File transmission itself is stopped or restarted by a timer.

Further, although the RFC2090 is adapted to support the multicast of the TFTP, there may be high likelihood that the multicast is unnecessary to use according to cases. In the case where file transmission for a normal operation is made in an environment in which an internal network is built in one equipment, one primary portion serves as a TFTP server, and remaining portions serve as TFTP clients, there is a high likelihood that one-to-one transmission spends much time and causes a transmission error.

However, it is not necessary to internally analyze and operate a multicast group.

For example document US 6 185 623 discloses a method that a client other than the master client can join a broadcasting at any time.

### SUMMARY OF THE INVENTION

The present invention, therefore, is conceived to solve the aforementioned and other problems, and it is an objective of the present invention to provide a system and method for Trivial File Transfer Protocol including a broadcasting function in which a TFTP option for broadcasting is defined to add a broadcasting function, which allows files to be transferred through broadcast when multiple clients simultaneously request file transmission to one server, resulting in a simple operation as compared to using multicast.

It is another object of the present invention to provide a method and apparatus using the broadcast TFTP allows a transmission speed faster than that of an existing one-to-one transmission manner, which makes it possible for multiple clients to download files from one server in a quick and efficient manner.

It is yet another object of the present invention to provide when adding a block size option item in addition to the broadcast option item extension, the block size larger than a previous block size allowing more rapid file transmission.

It is still another object of the present invention to provide the most efficient file transmission where a sub network is a broadcasting network, a number of clients exist, and simultaneous file transmission is required.

It is another object of the present invention to provide maximum transmission operation efficiency while minimizing added functions since the TFTP is not used for equipment of which all network functions are substantially active.

It is yet another object of the present invention to provide a system and method for Trivial File Transfer Protocol including a broadcasting function that is easy to implement, cost effective, secure and reliable.

These and other objects and advantages are provided by a system and method for a trivial file transfer protocol including a broadcasting function according to the appended claims 1 and 7.

Preferred embodiments are defined in the dependent claims.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
Fig. 1 is a diagram illustrating the configuration of a system for a file transfer protocol including a broadcasting function, which is applied to the present invention;
Fig. 2a is a diagram illustrating a structure of a read request (RRQ) message redefined to use in an embodiment of the present invention;
Fig. 2b is a diagram illustrating a case where actual numerical values are applied to the message format of Fig. 2a;
Fig. 3a is a diagram illustrating a structure of an option acknowledgement (OACK) message transmitted by a server system used in the present invention;
Fig. 3b is a diagram illustrating a case where actual numerical values are applied to the message format of Fig. 3a;
Fig. 4 is a flow diagram of a method for Trivial File Transfer Protocol including a broadcasting function according to an embodiment of the present invention;
Fig. 5 is a flow diagram illustrating a processing procedure upon occurrence of an error in a method for Trivial File Transfer Protocol including a broadcasting function according to an embodiment of the present invention;
Fig. 6a is a diagram illustrating a case where actual numerical values are applied to a read request (RRQ) message redefined to use in another embodiment of the present invention;
Fig. 6b is a diagram illustrating a case where actual numerical values are applied to an option acknowledgement (OACK) message, transmitted by a server system, redefined to use in another embodiment of the present invention;
Fig. 7 is a flow diagram of a method for Trivial File Transfer Protocol including a broadcasting function according to another embodiment of the present invention;

### DETAILED DESCRIPTION OF THE PREFERRED EMBODIMENTS

Hereinafter, preferred embodiments of the present invention will be described in detail with reference to the accompanying drawings so that those skilled in the art to which the present invention belongs can easily carry out the present invention.

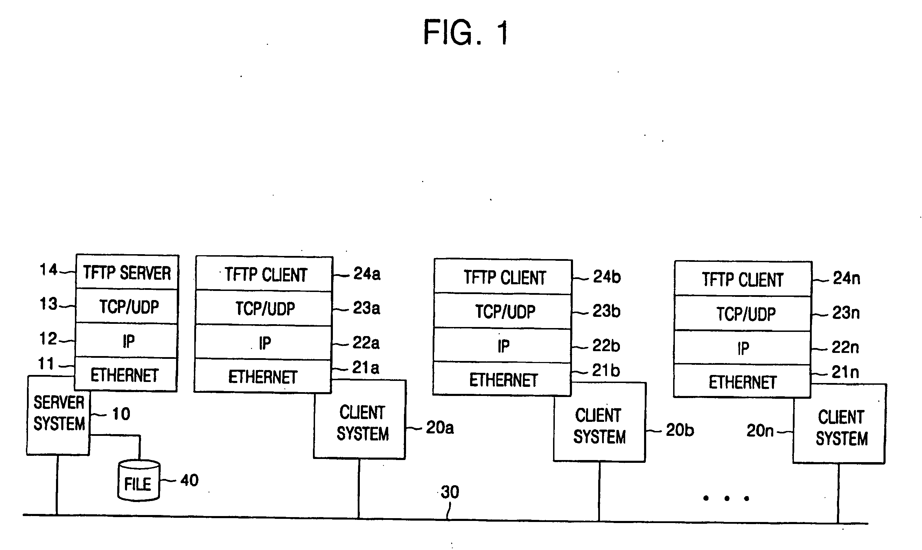

Fig. 1 is a diagram illustrating the configuration of a system for a file transfer protocol including a broadcasting function, which is applied to the present invention.

Referring to Fig. 1, the system for a Trivial File Transfer Protocol including the broadcasting function, which is applied to the present invention, is composed of a server system 10 and a number of client systems 20a to 20n.

A file transmission process that is generally progressed in the Trivial File Transfer Protocol System (TFTP) will be discussed by way of example in connection with the server system 10 and the client 20a.

The server system 10 and the client system 20a are interconnected over a network 30 to give and take a file 40.

At this time, a TFTP server 14 run on the server system 10 and a TFTP client 24a run on the client system 20a are operated over an Ethernet 11 with Internet Protocols (IPs) 12 and 22a using the UDP of TCP and UDP.

The TFTP client 24a is run on the system 20a in which the TFTP client 24a is embedded to begin to connect to the TFTP server 14. The TFTP client 24a transmits a read/write request message (RRQ: Read ReQuest/WRQ: Write ReQuest) to the TFTP server 14 to establish a connection with the TFTP server 14.

At this time, the TFTP client 24a selects a port for UDP of TCP/LTDP 23a at the TFTP client side and transmits the read/write request message (RRQ/WRQ) containing its own IP address and a selected port number to the TFTP server 14 via this selected port.

The TFTP server 14 receives the read/write request message (RRQ)/WRQ, transmitted from the TFTP client 24a, via the port 69 for UDP of TCP/UDP 13 at the TFTP server side.

The TFTP server 14 registers the IP (Internet protocol) address and the port number of the TFTP client when receiving the request message, and transmits an acknowledgement message (ACK) in response to the request to the TFTP client 24a via the same port as that used upon receiving the request message using the registered IP address and port number.

The TFTP client 24a receives the acknowledgement message (ACK), transmitted by the TFTP server 14, via the previously selected port for the TFTP client side UDP 23 to establish the connection between the two systems.

If the connection between the TFTP server 14 and the TFTP client 24a is established, the file 40 requested by the TFTP client 24a in the read/write request message (RRQ/WRQ) is transmitted between the two systems via the two UDP ports.

The TFTP server 14 and the TFTP client 24a keeps the connection until the transmission of the file 40 is completed, and closes the connection to disconnect the TFTP server 14 and the TFTP client 24a after the transmission is completed.

Meanwhile, for such a typical Trivial File Transfer Protocol system to include the broadcasting function of the present invention, it is required to define a new option and redefine a message type according to protocols defined in RFC (request for comments) 2347.

Generally, the read request message (RRQ) is a message used to establish a connection that is weeded for the client to read data from the server. That is, it is a request message to download files. At this time, "1" is used for the value of an operation code (OPC), which is the first field of the RRQ, and a filename consists of a character string with a variable length, accompanied by a definition field for a transmission mode.

The write request message (WRQ) is a message used to establish a connection that is needed for the client to write the data to the server. That is, it is a request message to upload the files. At this time, "2" is used for the value of an OPC that is the first field in the WRQ.

Meanwhile, "3" is used for an OPC value of a message to transfer a data block and "4" is used for an OPC value of an acknowledgement (ACK) message in response to receiving the data block.

"5" is used for an OPC value of a message when an error occurs. It is recommended to use "6" for an OPC value of an option ACK (OACK; option acceptance or non-acceptance) message when an option is added to the RRQ and WRQ messages in the extension TFTP.

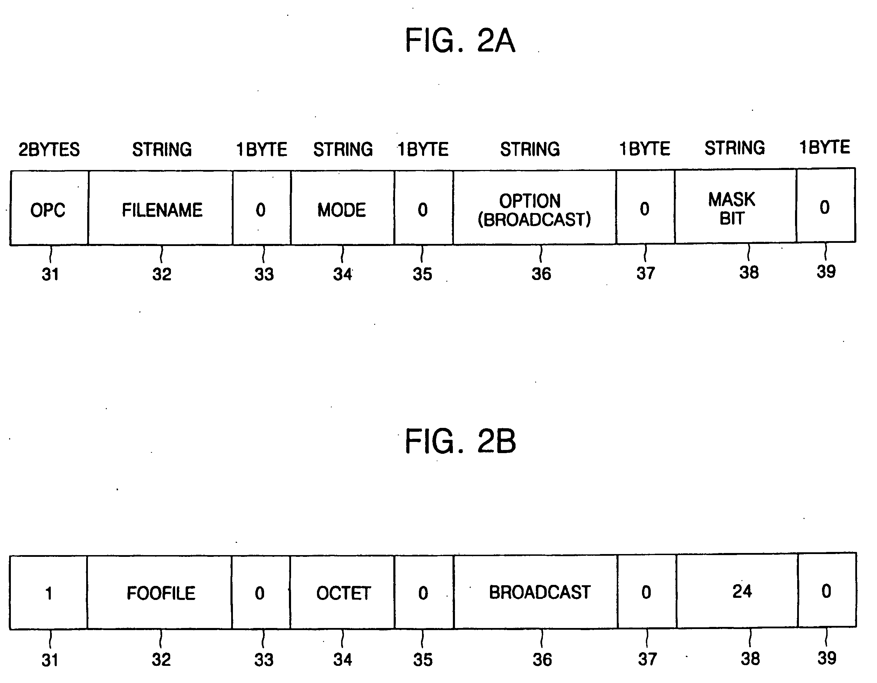

Fig. 2a is a diagram illustrating the structure of an RRQ message redefined for use in an embodiment of the present invention.

Referring to Fig. 2a, the RRQ message is composed of an operating code (OPC) field 31, a file name field 32, a mode field 34, an option field 36, and a mask bit field 38.

An operating code value of the operating code field 31 is 1, and a file name of the file name field 32 consists of a character string having a variable length. The file name is coded with an ASCII code and a 1-byte field 33 indicates its end point.

The mode field 34 is used to define a transmission mode. A character string used for the mode field is "netascii" in case of an ASCII mode and is "octet" in case of a binary file. A 1-byte field 35 indicates the end point of the mode field.

The option field 36 is a field newly defined to support the broadcasting function. An option character string used is "broadcast", and a 1-byte field 37 indicates the end point of the option field.

The mask bit field 38 is a field newly defined to support the broadcasting. It defines a value for a broadcasting option and is determined based on a broadcasting address of the client. The value has 8, 16, 24 or the like for respective classes.

Accordingly, in the case where files are transmitted in a broadcast mode and the broadcasting option belongs to a class C, the RRQ message may be defined as shown in Fig. 2b.

Fig. 2b is a diagram illustrating a case where actual numerical values are applied to the message format shown in Fig. 2a.

Referring to Fig. 2b, the operating code is defined as "1", the file name as "foofile", the transmission mode as an octet, the option field as a character string "Broadcast", and a mask bit field as 24 bits.

Next, the OACK message between the server system and the clients will be described.

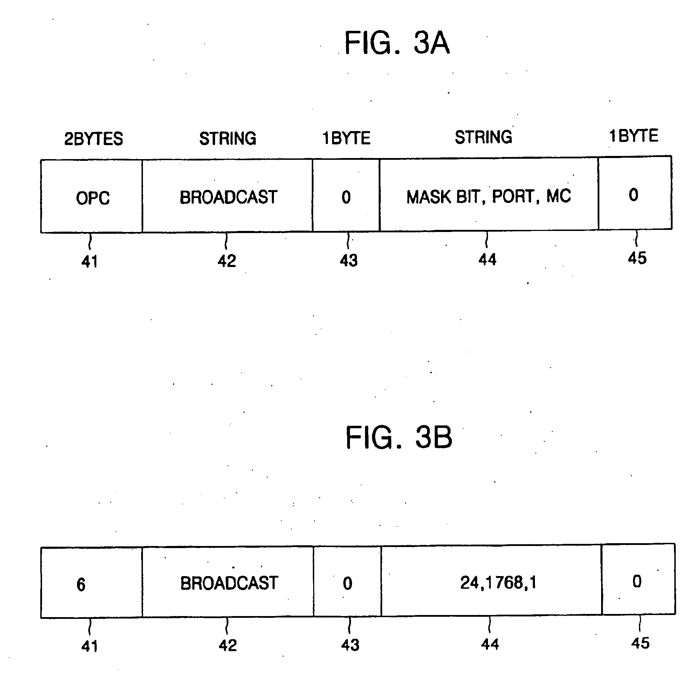

Fig. 3a is a structure diagram of an OACK acknowledgement message, transmitted by a server system, used in the present invention.

Referring to Fig. 3a, the OACK message is composed of an operating code (OPC) field 41, a broadcast field 42, a 1-byte field 43, a mask bit, port number and master client (Mask bit, Port, and MC) field 44, and a 1-byte field 45.

An operating code value of the operating code field 41 is 6. A character string "broadcast" is defined in the broadcasting field 42, and a 1-byte field 43 indicates an end point.

The mask bit, port number and master client (Mask bit, Port and MC) field 44 defines a value for a broadcasting option. It defines a broadcast mask bit, a UDP port number, and a master client bit, which are determined by the server system 10.

The mask bit accepts the value of the read request message (RRQ) received from the clients 20a to 20n if the value is acceptable. Otherwise, the mask bit is determined based on a broadcasting address of the server system 10.

The master client (MC) bit is set to 1 for any one of the clients 24a to 24n that has sent the read request message (RRQ) first and foremost and that becomes a master, and is set to 0 for other clients. The master client serves to send an acknowledgement message in response to the data packet.

Here, the master client is a client that has sent the read request message (RRQ) first and foremost. The master client sends an acknowledgement message to the data packet. The other clients do not send an acknowledgement message.

It is recommended to use 1768 as a broadcast UDP port, which is one of options redefined in RFC 2347. This port number is added to the OACK message transmitted from the server to the client so that the client interprets it. The client can accept another port number by the server.

In the case where the OACK message acknowledging the broadcast option is transmitted in response to the message (RRQ) including the broadcast option received from the client, the OACK message may be defined as shown in Fig. 3b, wherein the option includes the broadcast mode, Class C, the port number of 1768, and the correspondent client set as a master (1: master, 0: non-master).

For reference, the multicast TFTP uses 1758.

Fig. 3b is a diagram illustrating the case where actual numerical values are applied to the message format of Fig. 3a.

Referring to Fig. 3b, the operating code may be defined as "6", the broadcast option field as "broadcast", and the mask bit, port, and MC field as "24,1768,1" where 24 is the mask bit, 1768 is the UDP port and 1 is the MC field.

An actual file transmission process will be described in a state where the file transfer system including the broadcasting function is configured and the message format as set forth above is defined.

Prior to discussing an operation, the client system 24a is defined as a master client, and a time of the server system 10 waiting to receive read request messages from the other clients 24b to 24n after receiving the read request message (RRQ) from the master client 24a is defined as "T".

Further, "Ts" as a parameter required for operation is a timeout time of the server system 10 waiting until the master client 24a acknowledges the data after sending the data to the master client 24a. When the server system 10 does not receive the acknowledgement in this time, the server system 10 retransmits the data.

In addition, as other parameters required for operation, "n" is a parameter indicating the number of times by which the server system 10 retransmits the broadcasting message to the client systems 24a to 24n, and "a" is a parameter indicating a marginal time of the client systems 24a to 24n waiting to receive the data packet from the server system 10.

Since "n*A" is a time of the server system 10 waiting the client systems 24a to 24n, the waiting timeout time of the client systems 24a to 24n is set to be larger by "a" than n*A.

If the master client 24a transmits the read request message including the "broadcast" option field to receive files through broadcasting, the server system 10 returns an OACK to accept the "broadcast" option in response to receiving the message and then waits file transfer requests from the other client systems 24b to 24n for 'T' time.

The master client 24a receives the OACK in which the master client bit is set to "1," recognizes that the master client 24a is a master client for broadcasting transmission, sends an ACK, and then waits data.

If the read request message from the other client systems 24b to 24n arrives at the server system 10 in the "T" time, the server system 10 transmits the OACK message. The server system 10 receives the acknowledgement (ACK) message from the other client systems 24b to 24n and broadcasts the data after the "T" time has elapsed.

At this time, the master client 24a then transmits an acknowledgement message in response to the data while the other client systems 24b to 24n do not transmit the acknowledgement message. The server system 10 transmits the next data when the acknowledgement message from the master client 24a arrives at the server system.

Meanwhile, if the master client 24a is dropped while the server system 10 broadcasts normal data, the server system 10 waits an acknowledgement from the master client 24a for 'A' time and retransmits it when there is no acknowledgement.

If there is no acknowledgement until the data is transmitted "n" times, the server system 10 transmits an OACK to authorize the second other client 24b as a master client. Thereafter, the server confirms an acknowledgement message transmitted from the new master client 24b to continue to perform the procedure.

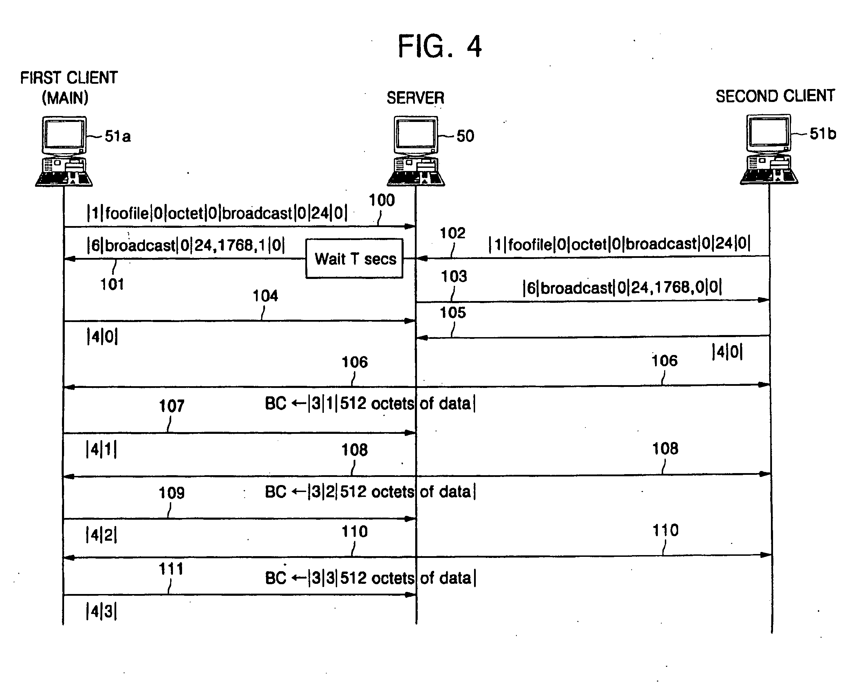

Fig. 4 is a flow diagram illustrating a method for a Trivial File Transfer Protocol including a broadcasting function according to an embodiment of the present invention.

Referring to Fig. 4, a first client 51a transmits a read request message (RRQ) to a server system in order to download files. At this time, the message packet has a newly defined option field with a "broadcast" option (100).

The server system 50 receives the first read request message and, in response thereto, transmits an OACK to accept such a "broadcast" option (101). Then, the server system 50 waits for 'T' time to see whether other clients are present. At this time, a master client (MC) value of the mask bit, port and master client (MC) field in the OACK packet has been set to "1" to notify that the client 51a is a master client.

The first client 51a receives the OACK in which the master client (MC) field has been set to "1" to recognize that the client 51a is a master client for broadcasting transmission, returns an acknowledgement message in response to the OACK message (104), and waits for the data.

Meanwhile, a second client 51b transmits a read request message to the server system 50 within "T" time (102), and the server system 50 returns an OACK in which the master client (MC) field has been set to "0" (103). In response, the second client 51b transmits an acknowledgement message (105). At this time, since the master client (MC) field has been set to "0," the second client 51b recognizes that the second client 51b is not a master client, and accordingly does not transmit an acknowledgement message when receiving the data.

Next, the server system 50 broadcasts the data after the "T" time has elapsed (106). In response, only the first client 51a, which is a master client, transmits an acknowledgement message (107), and the server system 50 transmits a subsequent packet when receiving the acknowledgement message (108).

Meanwhile, if the server system receives a read request message after the "T" time has elapsed, the server system handles it in a one-to-one manner using a new TFTP program or performs a new broadcasting TFTP process, as in a conventional manner.

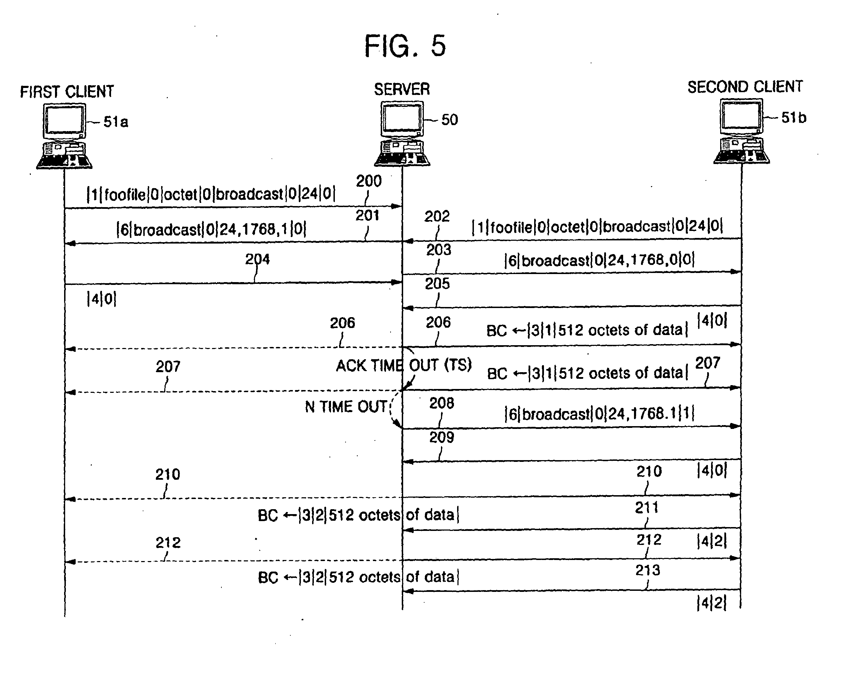

Fig. 5 is a flow diagram illustrating a processing procedure upon occurrence of an error in a method for a Trivial File Transfer Protocol including a broadcasting function according to an embodiment of the present invention.

Referring to Fig. 5, if the master client is dropped while broadcasting normal data as in Fig. 4, the server system 50 waits for the acknowledgement from the first client 51a, which is a master client, for 'A' time and retransmits the data when not receiving the acknowledgement.

The server system 50 transmits an OACK to authorize the second client 51b as a master client if the server system does not receive the acknowledgement even after the server system retransmits the data n times (208).

At this time, at the client side, a timer with n*(A + a) time begins to operate after the clients receive the data, and the second client 51b confirms and discards the retransmitted data packet since the second client has already received the block # (block number).

Meanwhile, the second client 51b confirms that the second client 51b is a master client when receiving the OACK, and then transmits an acknowledgement message (209, 211 and 213).

If the server system 50 has a trouble and the clients cannot receive any packet, the TFTP operation is stopped and an error message is outputted at an instant when the n*(A+a) timer of the clients is timed out.

Hereinafter, an embodiment in which a packet is more rapidly transmitted by redefining a block size along with a broadcast option according to an option extension protocol will be described.

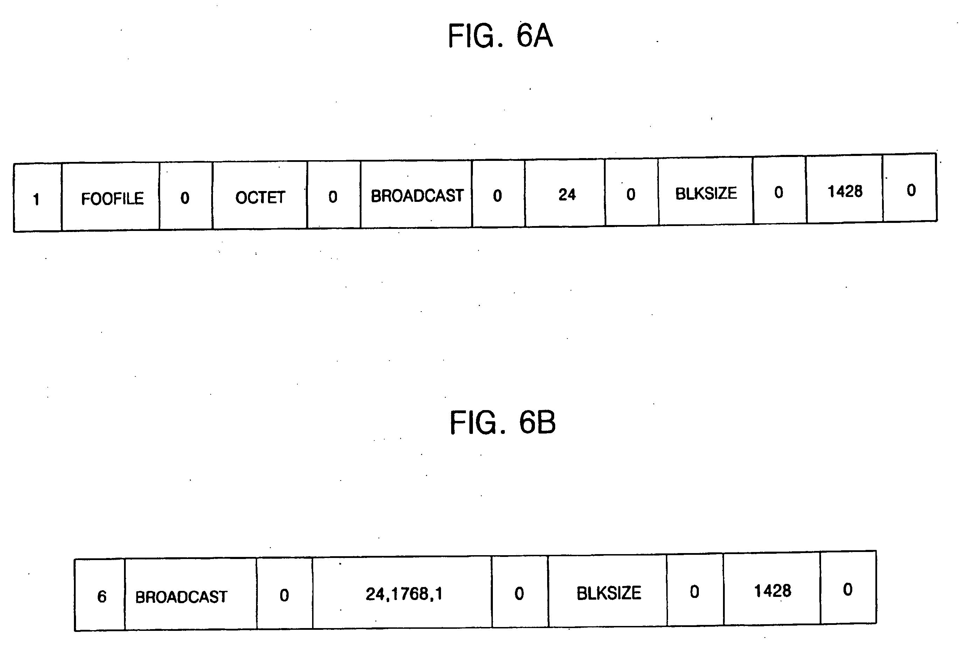

Fig. 6a is a diagram illustrating a case where actual numerical values are applied to a read request (RRQ) message redefined to use in another embodiment of the present invention.

Referring to Fig. 6a, the operating code is defined as "1", the file name as "foofile", the transmission mode as "octet", the first option field as a character string "Broadcast", the mask bit field as "24", the second option field as a character string "blksize" for block size, and the block size field as a block size value "1428".

Although upon transmitting and receiving files between the server and the client using the message extended with the broadcast option field, the block size has been fixed to "512" and the 512 octet (byte) has been transmitted and received in the above-stated embodiment, a data transmission unit upon transmitting and receiving files between the server and the client becomes a 1428 octet (byte) since the block size is redefined to "1428" in other embodiments.

Fig. 6b is a diagram illustrating the case where actual numeric values are applied to an option acknowledgement (OACK) message, transmitted by a server system, redefined to use in another embodiment of the present invention.

Referring to Fig. 6b, the operating code may be defined as "6", the first option field as "broadcast", the mask bit, port and master client (MC) field as "24,1768,1", the second option field as "blksize", and the block size field as "1428".

Accordingly, an actual file transmission process in the state where the system for the file transfer protocol including a broadcasting function has been configured and the block size in the message format has been redefined as described above will be discussed.

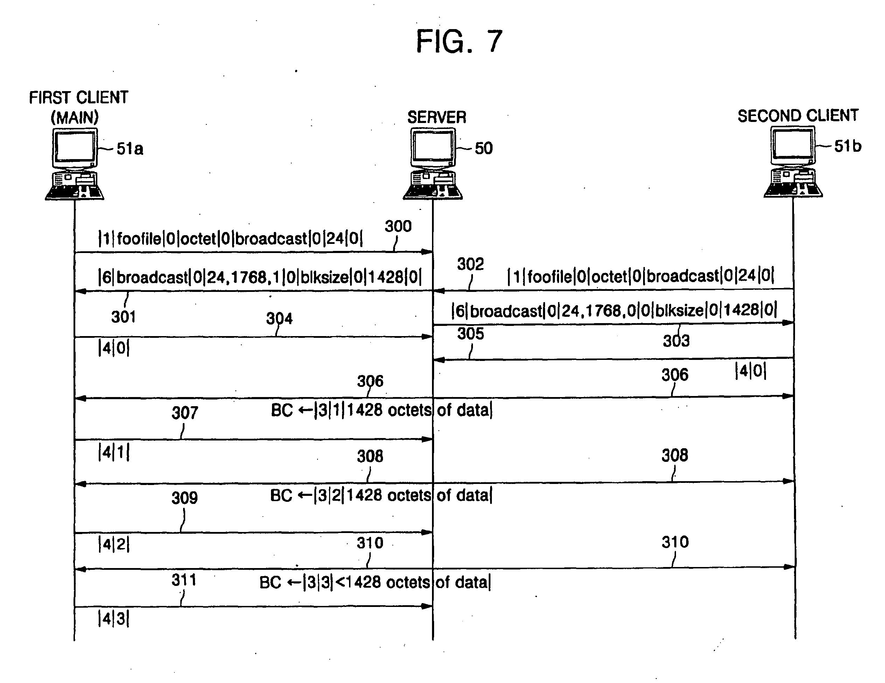

Fig. 7 is a flow diagram of a method for a Trivial File Transfer Protocol including a broadcasting function according to another embodiment of the present invention.

Referring to Fig. 7, the first client 51a transmits a read request message (RRQ) to the server system in order to download files. At this time, the message packet includes a newly defined option field with a "broadcast" option (300).

The server system 50 receives the first read request message (RRQ), accepts a "broadcast" option, transmits an OACK with a block size, which is a data transmission unit, redefined to a 1428 octet (301), and then waits for 'T' time to see whether other clients are present. At this time, the MC value of the mask bit, port, and master client (MC) field in the OACK packet has been set to "1" to notify that the first client 51a is a master client.

The first client 51 a receives the OACK in which the master client (MC) value has been set to "1" to recognize that the first client 51 a is a master client for broadcasting transmission and the data transmission unit has been redefined to a 1428 octet, sends an acknowledgement message (ACK) in response to the OACK message (304), and then waits the data.

Meanwhile, the second client 51b transmits a read request message (RRQ) to the server system 50 in the T time (302) and, in response, the server system 50 transmits an OACK in which the MC value of the mask bit, port, and MC field has been set to "0" and the block size has been redefined to a 1428octet (303). In response, the second client 51b transmits an acknowledgement message (ACK) (305).

At this time, the second client 51b is not a master client since the master client (MC) value has been set to "0," and accordingly the client 251b does not transmit an acknowledgement message when receiving the data. Further, since the second client 51b has recognized block size 1428 octet information, the second client 51b determines that it is a normal state when receiving the data in a 1428 octet unit.

Thereafter, the server system 50 broadcasts the data in a 1428octet unit after the T time has elapsed (306), and only the first client 51a, which is a master client, transmits an acknowledgement message (307). The server system 50 broadcasts the next packet when receiving the acknowledgement message from the first client 51 a, which is a master client (308).

In the case of the second embodiment, there is an advantage that actual file transmission speed becomes faster since it is possible to redefine a block size to broadcast.

Thus, if the server or the client supports the TFTP broadcast option as described above, multiple clients can rapidly download files from one server.

However, the following operation may occur if the server does not support such a broadcast option.

First, the client transmits a read/write (RRQ) message with an option field checked to be broadcast to the server, and the server transmits an error message to the relevant client because the server does not support a broadcast option function indicated by this message. Alternatively, the relevant server can transmit an option acknowledgement (OACK) message, to the client, to which supportable functions are added. At this time, if the client does not accept such functions, the server transmits an error message.

Unlike the above, the following operation may occur if the client does not support the broadcast option.

In this case, since the client cannot select the broadcast option itself when initially transmitting a read/write (RRQ) message to the server, the message exchange is made in the same manner as the earlier art regardless of whether the server supports the broadcast option or not.

Meanwhile, it should be noted that although the present invention has been described by way of example in which a client, sending a read/write message (RRQ) first and foremost, among a number of clients is selected as a master and the next data are sequentially transmitted after an acknowledgement (ACK) message is received from the master client, the present invention can be applied to a case where a network is unconditionally operated without selecting a master client according to an operating plan of a system operator if acknowledgement (ACK) messages are received from a plurality of clients or even though acknowledgement (ACK) messages are not received from the plurality of clients.

Although the preferred embodiments of the present invention have been described in detail, it will be understood by those skilled in the art to which the present invention belong that several modifications or variations may be made to the present invention without departing the technical spirits and scope the present invention defined in the appended claims. Therefore, future changed embodiments of the present invention are included in the technique of the present invention.

As described above, according to the present invention, there is an advantage that using the broadcast TFTP allows a transmission speed faster than that of an existing one-to-one transmission manner, which makes it possible for multiple clients to download files from one server in a quick and efficient manner.

In addition, in the case of adding a block size option item in addition to the broadcast option item extension, the block size larger than a previous block size allows more rapid file transmission.

Advantageously, it is possible to accomplish the most efficient file transmission by applying the method of the present invention to the case where a sub network is a broadcasting network, a number of clients exist, and simultaneous file transmission is required.

Further, it is advantageously possible to maximize transmission operation efficiency while minimizing added functions since the TFTP is not used for equipment of which all network functions are substantially active.

## Claims

1. A system for Trivial File Transfer Protocol including a broadcasting function, said system comprising:
a plurality of client system adapted to transmit an extended read request message of said Trivial File Transfer Protocol including a broadcasting option, and to transmit an acknowledgement message whenever said client system receives data when said client system receives an option acknowledgement message notifying that said client system is a master client; and
a server system adapted to transmit said option acknowledgement message including extension notifying whether said client system is said master client in response to receiving said extended read request message from said client system during a predetermined time, to broadcast said data, and then sequentially, to broadcast said data when said server system receives said acknowledgement message from said client system set as a master client among said plurality of clients.

2. The system according to claim 1, wherein said server system is adapted to perform one-to-one processing through a new trivial file transfer program or to allocate a new port to broadcast, when said server receives said extended read request message to request broadcasting from another client after a predetermined time has elapsed.

3. The system according to claim 1, wherein when said server system does not receive said acknowledgement message from said master client for a predetermined time, said server system is adapted to designate another client as a master client and to transmit an acknowledgement message notifying that said other client is a master client to broadcast said data, and then, when said server system receives said acknowledgement message from said new master client to sequentially broadcast said data.

4. The system according to claim 1, wherein said extended read request message includes:
an operating code field indicating a value for a message type;
a file name field having a file name coded with an American Standard Code for Information Interchange code;
a mode field defining a transmission mode;
an option field for supporting broadcasting; and
a mask bit field for defining a value of said option field.

5. The system according to claim 1, wherein said option acknowledgement message transmitted by said server system includes:
an operating code field indicating a value for a message type;
a broadcasting field for supporting broadcasting; and
a field notifying a mask bit, a port number, and a master client or not

6. The system according to claim 1, wherein the system is adapted to select a client transmitting said read request message first and foremost as said master client.

7. A method for Trivial File Transfer Protocol including a broadcasting function, the method comprising:
transmitting, by a first client, an extended read request message to request broadcasting file transmission to a server;
transmitting, by said server, an option acknowledgement message notifying that said first client is a master client to said first client;
transmitting, by a second client, an extended read request message to request broadcasting file transmission to said server;
transmitting, by said server, an option acknowledgement message notifying that said second client is not said master client to said second client;
broadcasting, by said server, data and then waiting to receive an acknowledgement message from said first client; and
effecting, by said server, repetition beginning with said broadcasting step until said server transmits remaining data when said server receives said acknowledgement message from said first client;
**characterized in that**,
performing, by said server, one-to-one processing through a new trivial file transfer program or allocating a new port to broadcast, when said server receives said extended read request message to request broadcasting from another client after a predetermined time has elapsed.

8. The method according to claim 7, further comprising:
designating, by said server, said second client as said master client when said server does not receive said acknowledgement message in response to receiving said data from said first client for a certain time; and
transmitting an option acknowledgement message notifying that said second client is designated as said master client to said second client and then performing data transmission.

9. The method according to claim 7, further comprising:
transmitting an error message to each client upon occurrence of trouble in said server.

10. The method according to claim 7, wherein when said server does not support said broadcasting option function, said server transmits an error message to a relevant client when said server receives said extended read request message to request broadcasting file transmission from an arbitrary client.

11. The method according to claim 7, wherein when said server does not support said broadcasting option function, said server transmits an option acknowledgement message to said client with only supportable functions checked when said server receives said extended read request message to request broadcasting file transmission from an arbitrary client.

12. The system according to claim 1, wherein:
the extended read request message of said Trivial File Transfer Protocol includes at least one of a broadcasting option and a block size option; and
the server system transmits said option acknowledgement message including an extension notifying added block size information in response to receiving said extended read request message from said client system, and then broadcasts said data in a relevant block size unit when said server system receives said acknowledgement message from said client system set as said master client among said plurality of clients.

13. The system according to claim 12, wherein when said server system does not receive said acknowledgement message from said master client for a predetermined time, said server system designates another client as said master client and transmits an acknowledgement message notifying that said other client is said master client, broadcasting said data, and sequentially broad-casting said data when said server system receives said acknowledgement message from said new master client.

14. The system according to claim 12, said extended read request message includes:
an operating code field indicating a value for a message type;
a file name field having a file name coded with an American Standard Code for Information Interchange code;
a mode field defining a transmission mode;
a first option field for supporting said broadcasting;
a mask bit field for defining a value of said option field; and
a second option field and a block size value field for supporting a block size.

15. The system according to claim 12, wherein said option acknowledgement message transmitted by said server system includes:
an operating code field indicating a value for a message type;
a broadcasting field for supporting said broadcasting;
a field for notifying a mask bit, a port number, and a master client or not; and
an option field and a block size value field for supporting a block size.

16. The system according to claim 12, wherein a client transmitting said read request message first and foremost is selected as said master client.

17. The method according to claim 7, wherein:
the option acknowledgement message includes block size information; and
the data is broadcast in a redefined block size unit.

18. The method according to claim 17, further comprising:
designating, by said server, said second client as said master client when said server does not receive said acknowledgement message in response to receiving said data from said first client for a certain time; and
transmitting said option acknowledgement message notifying that said second client is designated as said master client to said second client and then performing said data transmission.

19. The method according to claim 17, further comprising:
transmitting an error message to each client upon occurrence of trouble in said server.

20. The method according to claim 17, wherein when said server does not support at least one of said broadcasting option function and a block size option function, said server transmits an error message to a relevant client when said server receives said extended read request message to request broadcasting file transmission from an arbitrary client.

21. The method according to claim 17, wherein when said server does not support at least one of a broadcasting option function and a block size option function, said server transmits said option acknowledgement message with only supportable functions checked to said client when said server receives said extended read request message to request broadcasting file transmission from an arbitrary client.

## Patentansprüche

1. System für das Trivialdateiübertragungsprotokoll einschließlich einer Rundsendefunktion, wobei das System aufweist:
eine Mehrzahl von Client Systemen, die geeignet sind, eine erweiterte Leseanforderungsnachricht des Trivial File Transfer Protocol einschließlich einer Rundsendeoption zu übermitteln, und eine Bestätigungsnachricht zu übermitteln jedes Mal wenn das Client System Daten empfängt, wenn das Client System eine Optionsbestätigungsnachricht empfängt, die benachrichtigt, dass das Client System ein Master Client ist; und
ein Serversystem, das geeignet ist, die Optionsbestätigungsnachricht einschließlich Erweiterung zu übermitteln, die benachrichtigt, ob das Client System der Master Client ist, in Antwort auf Empfang der erweiterten Leseanforderungsnachricht von dem Client System während einer vorbestimmten Zeit, die Daten rundzusenden, und dann aufeinanderfolgend die Daten rundzusenden, wenn das Serversystem die Bestätigungsnachricht von dem Client System, das als ein Master Client unter der Mehrzahl von Clients bestimmt ist, empfängt.

2. System nach Anspruch 1, wobei das Serversystem geeignet ist, eine eins-zu-eins Verarbeitung durch ein neues Trivialdateiübertragungsprogramm durchzuführen, oder einen neuen Port zum Rundsenden zuzuordnen, wenn der Server die erweiterte Leseanforderungsnachricht zum Anfordern des Rundsendens von einem anderen Client nach Vergehen einer vorbestimmten Zeit empfängt.

3. System nach Anspruch 1, wobei wenn das Serversystem die Bestätigungsnachricht von dem Master Client für eine vorbestimmte Zeit nicht empfängt, das Serversystem geeignet ist, einen anderen Client als einen Master Client zu bestimmen und eine Bestätigungsnachricht zu übermitteln, die benachrichtigt, dass der andere Client ein Master Client ist, die Daten rundzusenden, und dann, wenn das Serversystem die Bestätigungsnachricht von dem neuen Master Client empfängt, aufeinanderfolgend die Daten rundzusenden.

4. System nach Anspruch 1, wobei die erweiterte Leseanforderungsnachricht aufweist:
ein Operationscodefeld, das einen Wert für eine Nachrichtenart angibt;
ein Dateinamefeld mit einem Dateinamen, der mit einem American Standard Code for Information Interchange Code codiert wird;
ein Modusfeld, das einen Übertragungsmodus definiert;
ein Optionsfeld zum Unterstützen der Rundsendung; und
ein Maskenbitfeld, das einen Wert des Optionsfeldes definiert.

5. System nach Anspruch 1, wobei die von dem Serversystem übermittelte Optionsbestätigungsnachricht aufweist:
ein Operationscodefeld, das einen Wert für eine Nachrichtenart angibt;
ein Rundsendefeld zum Unterstützen der Rundsendung;
ein Feld, das einen Maskenbit, eine Portnummer und einen Master Client oder nicht angibt.

6. System nach Anspruch 1, wobei das System geeignet ist, einen Client, der die Leseanforderungsnachricht zuallererst übermittelt, als den Master Client auszuwählen.

7. Verfahren für das Trivialdateiübertragungsprotokoll einschließlich einer Rundsendefunktion, wobei das Verfahren aufweist:
Übermitteln, von einem ersten Client, einer erweiterten Lesenanforderungsnachricht zum Anfordern der Übersendedateiübertragung an einen Server;
Übermitteln, von dem Server, einer Optionsbestätigungsnachricht, die dem ersten Client benachrichtigt, dass der erste Client ein Master Client ist,
Übermitteln, von einem zweiten Client, einer erweiterten Leseanforderungsnachricht zum Anfordern der Rundsendedateiübertragung an den Server;
Übermitteln, von dem Server, einer Optionsbestätigungsnachricht, die den zweiten Client benachrichtigt, dass der zweite Client nicht der Master Client ist;
Rundsenden, von dem Server, der Daten und dann Warten auf Empfang einer Bestätigungsnachricht von dem ersten Client; und
Betätigen, von dem Server, der Wiederholung, die mit dem Rundsendeschritt anfängt bis der Server die Restdaten übermittelt, wenn der Server die Bestätigungsnachricht von dem ersten Client empfängt;
**dadurch gekennzeichnet, dass** das Verfahren weiterhin aufweist:
Durchführen, von dem Server, einer eins-zu-eins Verarbeitung durch ein neues Trivialdateiübertragungsprogramm, oder Zuordnen eines neuen Portes zum Rundsenden, wenn der Server die erweiterte Leseanforderungsnachricht zum Anfordern der Rundsendung von einem anderen Client nach Vergehen einer vorbestimmten Zeit empfängt.

8. Verfahren nach Anspruch 7, weiterhin aufweisend:
Bestimmen, von dem Server, des zweiten Clients als den Master Client, wenn der Server die Bestätigungsnachricht in Antwort auf Empfang der Daten von dem ersten Client für eine bestimmte Zeit nicht empfängt;
Übermitteln einer Optionsbestätigungsnachricht, die dem zweiten Client benachrichtigt, dass der zweite Client als der Master Client bestimmt ist und dann Durchrühren der Datenübertragung.

9. Verfahren nach Anspruch 7, weiterhin aufweisend:
Übermitteln einer Fehlernachricht an jeden Client beim Auftreten einer Störung in dem Server.

10. Verfahren nach Anspruch 7, wobei wenn der Server die Rundsendeoptionsfunktion nicht unterstützt, der Server eine Fehlernachricht an einen relevanten Client übermittelt, wenn der Server die erweiterte Leseanforderungsnachricht zum Anfordern der Rundsendedateiübertragung von einem beliebigen Client empfängt.

11. Verfahren nach Anspruch 7, wobei wenn der Server die Rundsendeoptionsfunktion nicht unterstützt, der Server eine Optionsbestätigungsnachricht an den Client derart übermittelt, dass nur unterstützbare Funktionen angekreuzt sind, wenn der Server die erweiterte Leseanforderungsnachricht zum Anfordern der Rundsendedateiübertragung von einem beliebigen Client empfängt.

12. System nach Anspruch 1, wobei:
die erweiterte Leseanforderungsnachricht des Trivialdateiübertragungsprotokolls mindestens eine von einer Rundsendeoption und einer Blockgrößenoption aufweist; und
das Serversystem die Optionsbestätigungsnachricht einschließlich einer Erweiterung übermittelt, die die hinzugefügte Blockgrößeninformation benachrichtigt, in Antwort auf Empfang der erweiterten Leseanforderungsnachricht von dem Clientsystem, und dann die Daten in einer relevanten Blockgrößeneinheit rundsendet, wenn das Serversystem die Bestätigungsnachricht von dem Clientsystem empfängt, das als der Master Client unter der Mehrzahl von Clients bestimmt ist.

13. System nach Anspruch 12, wobei wenn das Serversystem die Bestätigungsnachricht von dem Master Client für eine vorbestimmte Zeit nicht empfängt, das Serversystem einen anderen Client als den Master Client bestimmt und eine Bestätigungsnachricht übermittelt, die benachrichtigt, dass der andere Client der Master Client ist, die Daten rundsendet, und die Daten aufeinanderfolgend rundsendet, wenn das Serversystem die Bestätigungsnachricht von dem neuen Master Client empfängt.

14. System nach Anspruch 12, wobei die erweiterte Leseanforderungsnachricht aufweist:
ein Operationscodefeld, das einen Wert für eine Nachrichtenart angibt;
ein Dateinamefeld, mit einem Dateinamen, der mit einem American Standard Code for Information Interchange Code codiert ist;
ein Modusfeld, das einen Übertragungsmodus definiert;
ein erstes Optionsfeld zum Unterstützen der Rundsendung;
ein Maskenbitfeld zum Definieren eines Wertes des Optionsfeldes; und
ein zweites Optionsfeld und ein Blockgrößenwertfeld zum Unterstützen einer Blockgröße.

15. System nach Anspruch 12, wobei die von dem Serversystem übermittelte Optionsbestätigungsnachricht aufweist:
ein Operationscodefeld, das einen Wert für eine Nachrichtenart angibt;
ein Rundsendefeld zum Unterstützen der Rundsendung;
ein Feld, zum Benachrichtigen eines Maskenbits, einer Portnummer, und
eines Master Clients oder nicht; und
ein Optionsfeld und ein Blockgrößenwertfeld zum Unterstützen einer Blockgröße.

16. System nach Anspruch 12, wobei ein Client, der die Leseanforderungsnachricht zuallererst übermittelt, als der Master Client ausgewählt wird.

17. Verfahren nach Anspruch 7, wobei:
die Optionsbestätigungsnachricht Blockgrößeninformation aufweist; und
die Daten in einer umdefinierten Blockgrößeneinheit rundgesendet werden.

18. Verfahren nach Anspruch 17, weiterhin aufweisend:
Bestimmen, von dem Server, des zweiten Clients als den Master Client, wenn der Server die Bestätigungsnachricht in Antwort auf Empfang der Daten von dem ersten Client für eine bestimmte Zeit nicht empfängt; und
Übermitteln der Optionsbestätigungsnachricht, die dem zweiten Client benachrichtigt, dass der zweite Client als der Master Client bestimmt ist, und dann Durchführen der Datenübertragung.

19. Verfahren nach Anspruch 17, weiterhin aufweisend:
Übermitteln einer Fehlernachricht an jeden Client beim Auftreten einer Störung in dem Server.

20. Verfahren nach Anspruch 17, wobei wenn der Server mindestens eine der Rundsendeoptionsfunktion und einer Blockgrößenoptionsfunktion nicht unterstützt, der Server eine Fehlernachricht an einen relevanten Client übermittelt, wenn der Server die erweiterte Leseanforderungsnachricht zum Anfordern der Rundsendedateiübertragung von einem beliebigen Client empfängt.

21. Verfahren nach Anspruch 17, wobei wenn der Server mindestens eine von einer Rundsendeoptionsfunktion und einer Blockgrößenoptionsfunktion nicht unterstützt, der Server die Optionsbestätigungsnachricht derart an den Client übermittelt, dass nur unterstützbare Funktionen angekreuzt sind, wenn der Server die erweiterte Leseanforderungsnachricht zum Anfordern der Rundsendedateien von einem beliebigen Client empfängt.

## Revendications

1. Système pour protocole banal de transfert de fichiers incluant une fonction de diffusion, ledit système comprenant:
une pluralité de systèmes clients adaptés à émettre un message étendu de demande de lecture dudit protocole banal de transfert de fichiers incluant une option de diffusion, et à émettre un message d' accusé de réception chaque fois que ledit système client reçoit des données lorsque ledit système client reçoit un message d'accusé de réception d'option notifiant que ledit système client est un client maître ; et
un système serveur adapté à émettre ledit message d'accusé de réception d'option incluant une extension notifiant si ledit système client est ledit client maître en réponse à la réception dudit message étendu de demande de lecture provenant dudit système client pendant un temps prédéterminé, à diffuser lesdites données, et ensuite séquentiellement, à diffuser lesdites données lorsque ledit système serveur reçoit ledit message d'accusé de réception dudit système client fixé comme client maître parmi ladite pluralité de clients.

2. Système selon la revendication 1, dans lequel ledit système serveur est adapté à effectuer un traitement de un à un au moyen d'un nouveau programme banal de transfert de fichiers ou à attribuer un nouveau port pour diffusion, lorsque ledit serveur reçoit, d'un autre client, ledit message étendu de demande de lecture pour demander une diffusion après qu'un temps prédéterminé s'est écoulé.

3. Système selon la revendication 1, dans lequel lorsque ledit système serveur ne reçoit pas ledit message d'accusé de réception dudit client maître pendant un temps prédéterminé, ledit système serveur est adapté à désigner un autre client comme client maître et à émettre un message d'accusé de réception notifiant que ledit autre client est un client maître pour diffuser lesdites données, et ensuite, lorsque ledit système serveur reçoit ledit message d'accusé de réception dudit nouveau client maître, à diffuser séquentiellement lesdites données.

4. Système selon la revendication 1, dans lequel ledit message étendu de demande de lecture contient :
une zone de code d'opération indiquant une valeur pour un type de message ;
une zone de nom de fichier dans laquelle est codé un nom de fichier à l'aide d'un code en code standard américain pour l'échange d'information ;
une zone de mode définissant un mode d'émission ;
une zone d'option destinée à supporter la diffusion ; et
une zone de bit de masque destinée à définir une valeur de ladite zone d'option.

5. Système selon la revendication 1, dans lequel ledit message d'accusé de réception d'option émis par ledit système serveur contient :
une zone de code d'opération indiquant une valeur pour un type de message ;
une zone de diffusion destinée à supporter la diffusion ; et
une zone notifiant un bit de masque, un numéro de port, et un client maître ou non.

6. Système selon la revendication 1, dans lequel le système est adapté à choisir, comme ledit client maître, un client émettant d'abord et avant tout ledit message de demande de lecture.

7. Procédé pour protocole banal de transfert de fichiers incluant une fonction de diffusion, le procédé comprenant:
l'émission, par un premier client, d'un message étendu de demande de lecture pour demander à un serveur la diffusion d'une transmission de fichiers ;
l'émission, par ledit serveur, d'un message d'accusé de réception d'option notifiant, audit premier client, que ledit premier client est un client maître ;
l'émission, par un deuxième client, d'un message étendu de demande de lecture pour demander, audit serveur, la diffusion d'une transmission de fichiers ;
l'émission, par ledit serveur, d'un message d'accusé de réception d'option notifiant, audit deuxième client, que ledit deuxième client n'est pas ledit client maître;
la diffusion, par ledit serveur, de données et ensuite l' attente de recevoir un message d' accusé de réception provenant dudit premier client ; et
la réalisation, par ledit serveur, d'une répétition commençant par ladite étape de diffusion jusqu'à ce que ledit serveur émette les données restantes lorsque ledit serveur reçoit ledit message d'accusé de réception dudit premier client ;
**caractérisé par** l'exécution, par ledit serveur, d'un traitement de un à un au moyen d'un nouveau programme banal de transfert de fichiers ou par l'attribution d'un nouveau port pour diffusion, lorsque ledit serveur reçoit, d'un autre client, ledit message étendu de demande de lecture pour demander une diffusion après qu'un temps prédéterminé s'est écoulé.

8. Procédé selon la revendication 7, comprenant en outre:
la désignation, par ledit serveur, dudit deuxième client comme ledit client maître lorsque ledit serveur ne reçoit pas, dudit premier client pendant un certain temps, ledit message d'accusé de réception en réponse à la réception desdites données ; et
l'émission d'un message d'accusé de réception d'option notifiant audit deuxième client que ledit deuxième client est désigné comme ledit client maître et ensuite l'exécution de ladite transmission de données.

9. Procédé selon la revendication 7, comprenant en outre:
l'émission d'un message d'erreur vers chaque client à l'apparition d'une panne dans ledit serveur.

10. Procédé selon la revendication 7, dans lequel, lorsque ledit serveur ne supporte pas ladite fonction d'option de diffusion, ledit serveur émet un message d'erreur vers un client concerné lorsque ledit serveur reçoit, d'un client quelconque, ledit message étendu de demande de lecture pour demander la diffusion d'une transmission de fichiers.

11. Procédé selon la revendication 7, dans lequel, lorsque ledit serveur ne supporte pas ladite fonction d'option de diffusion, ledit serveur émet, vers ledit client, un message d'accusé de réception d'option avec seulement les fonctions vérifiées comme pouvant être supportées lorsque ledit serveur reçoit, d'un client quelconque, ledit message étendu de demande de lecture pour demander la diffusion d'une transmission de fichiers.

12. Système selon la revendication 1,
dans lequel le message étendu de demande de lecture dudit protocole banal de transfert de fichiers contient au moins l'une d'une option de diffusion et d'une option de taille de bloc ; et
dans lequel le système serveur émet ledit message d'accusé de réception d'option incluant une extension notifiant l'information ajoutée de taille de bloc en réponse à la réception, dudit système client, dudit message étendu de demande de lecture, et diffuse ensuite lesdites données dans une unité pertinente de taille de bloc lorsque ledit système serveur reçoit ledit message d'accusé de réception dudit système client fixé comme ledit client maître parmi ladite pluralité de clients.

13. Système selon la revendication 12, dans lequel, lorsque ledit système serveur ne reçoit pas ledit message d'accusé de réception dudit client maître pendant un temps prédéterminé, ledit système serveur désigne un autre client comme ledit client maître et émet un message d'accusé de réception notifiant que ledit autre client est ledit client maître, diffusant lesdites données, et diffusant séquentiellement lesdites données lorsque ledit système serveur reçoit, dudit nouveau client maître, ledit message d'accusé de réception.

14. Système selon la revendication 12, ledit message étendu de demande de lecture contient :
une zone de code d'opération notifiant une valeur pour un type de message ;
une zone de nom de fichier dans laquelle est codé un nom de fichier à l'aide d'un code en code standard américain pour l'échange d'information ;
une zone de mode définissant un mode d'émission ;
une première zone d'option destinée à supporter ladite diffusion ;
une zone de bit de masque destinée à définir une valeur de ladite zone d'option ; et
une seconde zone d'option et une zone de valeur de taille de bloc destinée à supporter une taille de bloc.

15. Système selon la revendication 12, dans lequel ledit message d'accusé de réception d'option émis par ledit système serveur contient:
une zone de code d'opération notifiant une valeur pour un type de message ;
une zone de diffusion destinée à supporter ladite diffusion ;
une zone destinée à indiquer un bit de masque, un numéro de port, et un client maître ou non ; et
une zone d'option et une zone de valeur de taille de bloc destinée à supporter une taille de bloc.

16. Système selon la revendication 12, dans lequel on choisit, comme ledit client maître, un client émettant d'abord et avant tout ledit message de demande de lecture.

17. Procédé selon la revendication 7,
dans lequel le message d'accusé de réception d'option contient une information de taille de bloc ; et
dans lequel les données sont diffusées dans une unité redéfinie de taille de bloc.

18. Procédé selon la revendication 17, comprenant en outre:
la désignation, par ledit serveur, dudit deuxième client comme ledit client maître lorsque ledit serveur ne reçoit pas, dudit premier client pendant un certain temps, ledit message d'accusé de réception en réponse à la réception desdites données ; et
l'émission dudit message d'accusé de réception d'option notifiant audit deuxième client que ledit deuxième client est désigné comme ledit client maître et ensuite l'exécution de ladite transmission de données.

19. Procédé selon la revendication 17, comprenant en outre:
l'émission d'un message d'erreur vers chaque client à l'apparition d'une panne dans ledit serveur.

20. Procédé selon la revendication 17, dans lequel, lorsque ledit serveur ne supporte pas au moins l'une de ladite fonction d'option de diffusion et d'une fonction d'option de taille de bloc, ledit serveur émet un message d'erreur vers un client concerné lorsque ledit serveur reçoit, d'un client quelconque, ledit message étendu de demande de lecture pour demander la diffusion d'une transmission de fichiers.

21. Procédé selon la revendication 17, dans lequel, lorsque ledit serveur ne supporte pas au moins l'une d'une fonction d'option de diffusion et d'une fonction d'option de taille de bloc, ledit serveur émet, vers ledit client, ledit message d'accusé de réception d'option avec seulement les fonctions vérifiées comme pouvant être supportées lorsque ledit serveur reçoit, d'un client quelconque, ledit message étendu de demande de lecture pour demander la diffusion d'une transmission de fichiers.
